# EUROPÄISCHE PATENTSCHRIFT

(11) **EP 1 318 630 B1**
(45) Veröffentlichungstag und Bekanntmachung des Hinweises auf die Patenterteilung: **11.05.2005**
(21) Anmeldenummer: 02026503.9
(22) Anmeldetag: 25.11.2002
(51) Int. Cl.: H04L 12/40

(54) **Matrizen zum Steuern der gerätespezifischen Geschwindigkeiten des Datentransfers auf einem Feldbus**
Matrices for controlling the device specific data transfer rates on a field bus
Matrices pour commander les débits de transfer de données spécifiques du dispositif sur un bus de terrain

(30) Priorität: 06.12.2001 DE 10159929
(43) Veröffentlichungstag der Anmeldung: 11.06.2003
(73) Patentinhaber: SIEMENS AKTIENGESELLSCHAFT, 80333 München (DE)
(72) Erfinder: Steindl, Günter, 92284 Poppenricht (DE)

(56) Entgegenhaltungen:
- WO-A-01/15384
- RAJA P ET AL: "Priority polling and dynamic time-window mechanisms in a multicycle Fieldbus" COMPEURO '93. 'COMPUTERS IN DESIGN, MANUFACTURING, AND PRODUCTION', PROCEEDINGS. PRIS-EVRY, FRANCE 24-27 MAY 1993, LOS ALAMITOS, CA, USA,IEEE COMPUT. SOC, US, 24. Mai 1993 (1993-05-24), Seiten 452-460, XP010096105 ISBN: 0-8186-4030-8
- TOVAR E ET AL: "Using WorldFIP networks to support periodic and sporadic real-time traffic" INDUSTRIAL ELECTRONICS SOCIETY, 1999. IECON '99 PROCEEDINGS. THE 25TH ANNUAL CONFERENCE OF THE IEEE SAN JOSE, CA, USA 29 NOV.-3 DEC. 1999, PISCATAWAY, NJ, USA,IEEE, US, 29. November 1999 (1999-11-29), Seiten 1216-1221, XP010366786 ISBN: 0-7803-5735-3
- KUMARAN S ET AL: "Multicycle operations in a field bus: application layer implications" IECON '89. 15TH ANNUAL CONFERENCE OF IEEE INDUSTRIAL ELECTRONICS SOCIETY (CAT. NO.89CH2795-3), PHILADELPHIA, PA, USA, 6-10 NOV. 1989 , 10. November 1989 (1989-11-10), XP010091272
- FERREIRO GARCIA R ET AL: "Fieldbus: preliminary design approach to optimal network management" FACTORY COMMUNICATION SYSTEMS, 1997. PROCEEDINGS. 1997 IEEE INTERNATIONAL WORKSHOP ON BARCELONA, SPAIN 1-3 OCT. 1997, NEW YORK, NY, USA,IEEE, US, 1. Oktober 1997 (1997-10-01), Seiten 321-325, XP010255513 ISBN: 0-7803-4182-1

## Beschreibung

Die Erfindung bezieht sich auf ein Verfahren zum Transfer von Daten über ein Kommunikationsmedium, einen Bus, insbesondere einen Feldbus.

Der so genannte PROFIBUS, ein Beispiel für einen Feldbus, ist in den DIN Normen 19245 T1 und 19245 T2 sowie dem Dokument "Peter Neumann: Kommunikationssysteme in der Automatisierungstechnik, Verlag Technik Berlin" beschrieben. Der Profibus (**Pro**cess **Fi**eld **Bus**) wird im Rahmen eines Normungsvorhabens von namhaften Unternehmen aus der Automatisierungsbranche sowie wissenschaftlichen Einrichtungen der Bundesrepublik Deutschland unterstützt. Feldbusse wie der Profibus dienen der Realisierung des Datenaustausches zwischen Teilsystemen einer technischen Anlage. Der PROFIBUS dient im engeren Sinne der standardisierten Verbindung von Automatisierungsgeräten im so genannten Feldbereich. Einsatzgebiete für Feldbusse sind z.B. der autarke Einsatz als Prozessdatenbussystem für Automatisierungsvorhaben oder als unterlagerte Kommunikationsebene in Prozessleitsystemen. Als Kommunikations- oder Busteilnehmer kommen damit gleichermaßen so genannte speicherprogrammierbare Steuerungen (SPS), numerische Steuerungen (NC), dezentrale Automatisierungsgeräte sowie busfähige Sensoren oder Aktoren in Betracht. Jeder Busteilnehmer ist ein Endgerät des Busses. Als solches weist er ein Kommunikationsmittel auf, welches den Anschluss des Teilnehmers an den Bus ermöglicht.

Mit dem PROFIBUS, als einem Beispiel für einen Feldbus, sind auch entsprechende Verfahren zum Transfer von Daten über den Feldbus bekannt. Eine Besonderheit des Datentransfers besteht darin, dass für den Bus eine so genannte Buszykluszeit vorgegeben ist, innerhalb derer sämtliche Busteilnehmer die Möglichkeit bekommen, auf den Bus zuzugreifen, d.h. Daten auf den Bus zu geben, um entweder die Daten direkt an einen anderen Busteilnehmer zu senden oder um bei einem anderen Busteilnehmer Daten anzufordern. Die Buszykluszeit ist damit gleichsam auf alle angeschlossenen Busteilnehmer aufgeteilt.

Aus dem Fachartikel Compeuro '93. ,"Computers In Design, Manufacturing, And Production", Proceedings, Pris-evry, Frankreich, 24.-27. Mai 1993, Los Alamitos, CA, USA, IEEE Comput. Soc., Seiten 452-460, ist bekannt, dass Echtzeit-Feldbussysteme sowohl synchronen als auch asynchronen Datenverkehr unterstützen. Die synchronen Daten werden periodisch generiert und müssen bis zu einem bestimmten Zeitpunkt übertragen werden. Asynchrone Daten werden durch nicht periodische Ereignisse generiert und können dadurch nicht vorhergesagt werden. Die Datenübertragung wird in zwei verschiedenen Phasen oder Zeitfenstern abgewickelt. Es wird ein Polling-Algorithmus beschrieben, welcher die Polling-Reihenfolge für den Datenverkehr generiert, wobei automatisch die periodischen festen Zeitpunkte berücksichtigt werden. Zudem wird beschrieben, wie durch dynamische Mechanismen Zeitfenster erweitert werden können und wie die Bandbreite des Netzwerks effizienter genutzt werden kann. Die beschriebenen Algorithmen werden in Echtzeit berechnet.

Der Fachartikel Industrial Electronics Society, 1999, IECON '99 Proceedings, The 25^{th} Annual Conference Of The IEEE San Jose, CA, USA 29. Nov.-3. Dez. 1999, Piscataway, NJ, USA, IEEE, Seiten 1216-1221, beschreibt die Möglichkeiten eines speziellen Kommunikationsprotokolls namens WorldFIP Echtzeitanforderungen eines verteilten Rechnersystems zu erfüllen. Das WorldFIP-Protokoll unterstützt sowohl periodischen als auch aperiodischen Datenverkehr. Insbesondere für den aperiodischen Verkehr ist jedoch eine komplexe Analyse erforderlich, um die zeitlichen Anforderungen zu erfüllen.

Nachteilig bei diesem bekannten Verfahren ist jedoch, dass kaum Möglichkeiten bestehen, sowohl die Buszykluszeit zu reduzieren als auch den Anschluss einer ständig wachsenden Zahl von Busteilnehmern zu ermöglichen. Der Erfindung liegt daher die Aufgabe zugrunde ein Verfahren anzugeben, bei dem diese Nachteile vermieden werden und das eine Verringerung der Buszykluszeit ermöglicht, ohne dass damit die Anzahl der anschließbaren Busteilnehmer sinkt.

Diese Aufgabe wird erfindungsgemäß mit den Merkmalen des Anspruchs 1 gelöst. Bei einem Verfahren zum Transfer von Daten über ein Kommunikationsmedium, einen Bus, insbesondere einen Feldbus, zwischen einer Mehrzahl von Kommunikationsteilnehmern, wobei der Datentransfer zyklisch gemäß einer Buszykluszeit erfolgt, ist dazu vorgesehen, dass ein erster Abschnitt der Buszykluszeit zur Bearbeitung von Kommunikationsaufträgen von Busteilnehmern, die in einer ersten Busbelegungsmatrix aufgeführt sind, und ein zweiter Abschnitt der Buszykluszeit zur Bearbeitung von Kommunikationsaufträgen von Busteilnehmern, die in einer zweiten Busbelegungsmatrix aufgeführt sind, vorgesehen ist.

Die Erfindung geht dabei von der Erkenntnis aus, dass es nicht erforderlich ist, jedem an den Bus angeschlossenen Kommunikationsteilnehmern in jedem Buszyklus Zugriff auf den Bus zu gewähren. Die Erfindung führt zu einem Verfahren das eine faire Buszuteilung für alle Busteilnehmer gewährleistet, ohne dass dabei die Gefahr bestünde, dass einer der Busteilnehmer aufgrund einer etwa niedrigen Priorität vom Datentransfer völlig ausgeschlossen würde. Das Verfahren eignet sich damit sogar als Scheduling-Verfahren in einem so genannten Multitaskingsystem. Dazu wäre in der nachfolgenden Beschreibung die Bezeichnung "Busteilnehmer" durch "Task" und "Buszykluszeit" durch "Zykluszeit" zu ersetzen.

Der Vorteil der Erfindung besteht darin, dass die Buszykluszeit nicht verlängert werden muss, wenn weitere Busteilnehmer an den Bus angeschlossen werden. Auf der anderen Seite kann auch bei konstanter Anzahl von Busteilnehmern die Buszykluszeit verkürzt werden.

Zweckmäßige Weiterbildungen dieses Verfahrens sind Gegenstand der Unteransprüche.

Vorteilhaft korrespondiert die erste Busbelegungsmatrix mit einer ersten Geschwindigkeitsklasse und die zweite Busbelegungsmatrix mit einer zweiten Geschwindigkeitsklasse und jede weitere Busbelegungsmatrix mit einer jeweils weiteren Geschwindigkeitsklasse. Für jede Busbelegungsmatrix bzw. die korrespondierende Geschwindigkeitsklasse wird festgelegt, bei jedem wievielten Buszyklus eine Bearbeitung von Kommunikationsaufträgen der einzelnen Kommunikationsteilnehmer der jeweiligen Busbelegungsmatrix vorgesehen ist. Dazu umfasst jede Busbelegungsmatrix zumindest eine Zeile und in jeder Zeile sind die Busteilnehmer referenziert, denen Zugriff auf den Bus gewährt werden soll.

Weiter vorteilhaft wird bei einer Busbelegungsmatrix mit *n* Zeilen während *n* aufeinander folgender Buszyklen jede Zeile sukzessive nacheinander genau einmal zu einer aktuellen Zeile. Gemäß dem Inhalt der aktuellen Zeile erfolgt die Buszuteilung.

Weiter vorteilhaft werden alle Busteilnehmer jeweils einer Geschwindigkeitsklasse zugeordnet. Sämtliche Busteilnehmer einer Geschwindigkeitsklasse werden dann gleichmäßig auf die Zeilen der entsprechenden Busbelegungsmatrix aufgeteilt. Dies ergibt einen gleichmäßigen mittleren Datendurchsatz am Bus, da durch die gleichmäßige Verteilung auf sämtliche Zeilen der Busbelegungsmatrix keine Konstellation eintreten kann, bei dem in einem ersten Buszyklus sämtliche Busteilnehmer einer Geschwindigkeitsklasse Zugriff auf den Bus erhalten und in allen nachfolgenden *n-1* Zyklen kein Buszugriff durch einen Busteilnehmer dieser Geschwindigkeitsklasse erfolgt.

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen.

Darin zeigen
- FIG 1: eine schematische Darstellung des erfindungsgemäßen Verfahrens,
- FIG 2a bis 2d: eine schematische Darstellung eines Ablaufs des erfindungsgemäßen Verfahrens und
- FIG 3a bis 3d: eine schematische Darstellung eines Ablaufs einer Variante des erfindungsgemäßen Verfahrens.

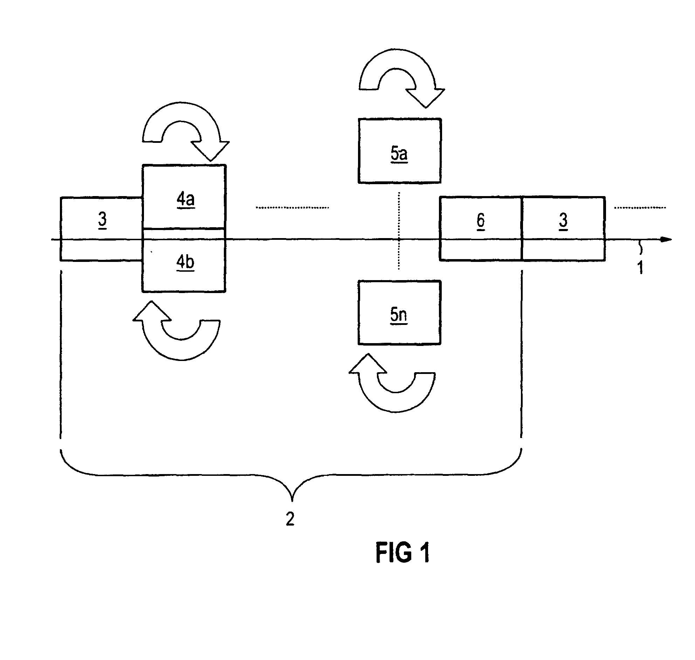

FIG 1 zeigt über einer Zeitachse 1 eine Buszykluszeit 2 bei einem Verfahren zum Transfer von Daten über einen Bus, insbesondere einen Feldbus. Weder der Bus selbst, noch die an ihn angeschossenen Busteilnehmer, noch die zwischen den Busteilnehmern gemäß dem Verfahren übertragenen Daten sind dargestellt.

Dargestellt ist eine erste Busbelegungsmatrix 3, eine zweite Busbelegungsmatrix 4a, 4b sowie eine Busbelegungsmatrix 5a, 5n und eine letzte Busbelegungsmatrix 6. Eine Busbelegungsmatrix 3, 4a, 4b, 5a, 5n, 6 wird im folgenden auch kurz als Matrix 3, 4a, 4b, 5a, 5n, 6 bezeichnet. Jede Matrix 3, 4a, 4b, 5a, 5n, 6 umfasst mindestens eine Zeile 3, 4a, 4b, 5a, 5n, 6, in der ein oder mehrere Bezeichner jeweils eines Busteilnehmers gespeichert sind. Die letzte Matrix 6 ist für so genannte azyklische Kommunikationsaufträge vorgesehen.

Der Inhalt der ersten Matrix 3 - und deren einziger Zeile 3 - lautet z.B. wie folgt: [ Busteilnehmer 1, Busteilnehmer 5, Busteilnehmer 6, Busteilnehmer 17 ]. Der Inhalt der ersten Zeile 4a der zweiten Matrix 4a, 4b lautet entsprechend z.B. wie folgt: [ Busteilnehmer 3, Busteilnehmer 7 ] und der Inhalt der zweiten Zeile 4a der zweiten Matrix 4a, 4b z.B.: [ Busteilnehmer 4, Busteilnehmer 8 ]. Der Inhalt der letzten Matrix 6 - und dessen einziger Zeile 6 - ergibt sich während des Ablaufs des Datenübertragungsverfahrens, da azyklische Kommunikationsaufträge in ihrem zeitlichen Eintreffen nicht vorhersagbar sind. Bei Eintreffen eine azyklischen Kommunikationsauftrags von einem bestimmten Busteilnehmer wird dessen Bezeichner in die letzte Matrix 6 aufgenommen, sofern deren Zeile 6 nicht bereits voll ist. Ist die Zeile 6 voll, wird der azyklische Kommunikationsauftrag bis zum folgenden Buszyklus 2 zurückgestellt.

Eine Buszuteilung gemäß einer Busbelegungsmatrix 3, 4a, 4b, 5a, 5n, 6 bedeutet, dass den Busteilnehmern, die in der Matrix 3, 4a, 4b, 5a, 5n, 6 aufgeführt sind, für einen vorgegebenen Zeitabschnitt ein Zugriff auf den Bus gewährt wird. Das im Stand der Technik bekannte Datenübertragungsverfahren lässt sich damit als eine Variante des erfindungsgemäßen Datenübertragungsverfahrens beschreiben, bei der nämlich nur eine erste Matrix 3 - mit einer einzigen Zeile 3 - für "normale" Kommunikationsaufträge und eine letzte Matrix 6 - mit einer einzigen Zeile 6 - für azyklische Kommunikationsaufträge vorgesehen ist. Bei jedem Buszyklus 2 wird sukzessive nacheinander jedem in der Zeile 3 referenzierten Busteilnehmer für eine bestimmte Zeitspanne Zugriff auf den Bus gewährt. Die Besonderheit des bekannten Verfahrens besteht darin, dass jeder Busteilnehmer in dem entsprechenden Pendant der Zeile 3 genau einmal referenziert ist, so dass während eines Buszyklusses jeder Busteilnehmer genau einmal Zugriff auf den Bus erhält.

Gemäß der Erfindung ist vorgesehen, dass ein erster Abschnitt der Buszykluszeit zur Bearbeitung von Kommunikationsaufträgen von Busteilnehmern, die in der ersten Busbelegungsmatrix 3 referenziert sind, und ein zweiter Abschnitt der Buszykluszeit zur Bearbeitung von Kommunikationsaufträgen von Busteilnehmern, die in der zweiten Busbelegungsmatrix 4a, 4b referenziert sind, vorgesehen ist. Jede Matrix 3, 4a, 4b, 5a...5n hat für einen bestimmten Buszyklus genau eine aktuelle Zeile 3, 4a, 4b, 5a...5b. Bei einer Matrix 3, 4a, 4b, 5a...5n mit n Zeilen 3, 4a, 4b, 5a...5n wird während n aufeinander folgender Buszyklen 2 jede Zeile 3, 4a, 4b, 5a...5n sukzessive nacheinander genau einmal zur aktuellen Zeile (dies ist in FIG 1 durch die Pfeile angedeutet).

In FIG 1 ist der Fall dargestellt, dass die zweite Matrix 4a, 4b zwei Zeilen 4a, 4b, eine erste Zeile 4a und eine zweite Zeile 4b, umfasst. Während eines bestimmten Buszyklusses 2 ist die erste Zeile 4a die aktuelle Zeile, während des nächst folgenden Buszyklusses 2 ist die zweite Zeile 4b die aktuelle Zeile.

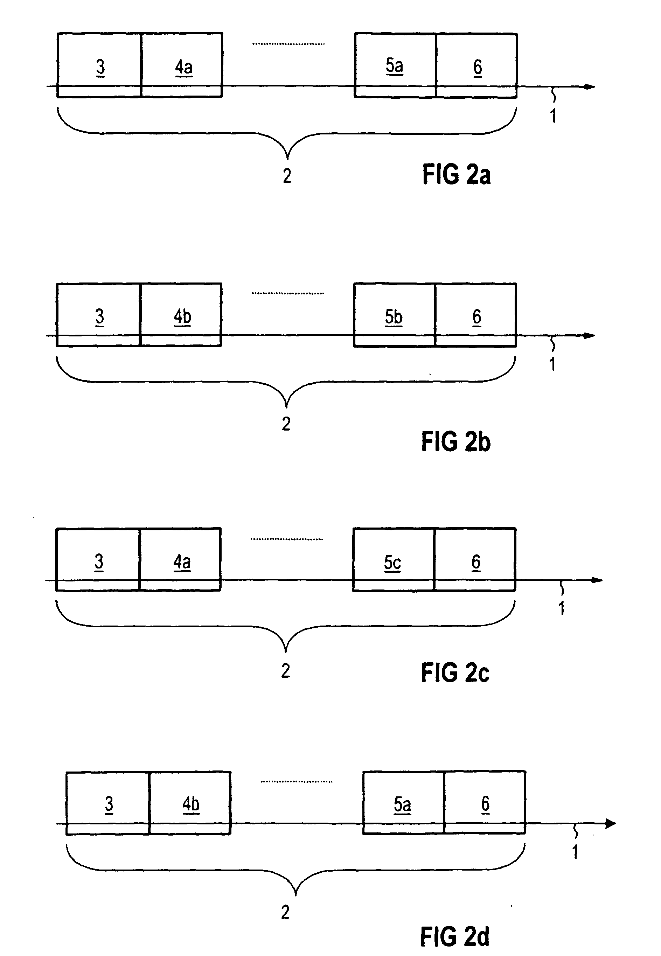

FIG 2a bis 2d zeigen schematisch die Auswirkungen einer Buszuteilung unter Verwendung der Busbelegungsmatrizen 3, 4a, 4b, 5a...5n. Die erste Matrix 3 umfasst nur eine Zeile 3 und den in ihr referenzierten Busteilnehmern wird jeweils zu Anfang eines jeden Buszyklusses 2 Zugriff auf den Bus gewährt. Aus der zweiten Matrix 4a, 4b ist bei einem ersten Buszyklus (FIG 2a) die erste Zeile 4a die aktuelle Zeile. Entsprechend wird während dieses Buszyklusses 2 den in der aktuellen Zeile 4a referenzierten Busteilnehmern Zugriff auf den Bus gewährt. Während des zweiten Buszyklusses 2 (FIG 2b) ist die zweite Zeile 4b die aktuelle Zeile. Entsprechend wird während dieses zweiten Buszyklusses 2 den in der aktuellen Zeile 4b referenzierten Busteilnehmern Zugriff auf den Bus gewährt. Während des dritten Buszyklusses (FIG 2c) ist in der zweiten Matrix 4a, 4b wieder die erste Zeile 4a die aktuelle Zeile, so dass den gleichen Busteilnehmern wie während des ersten Buszyklusses (FIG 2a) Zugriff auf den Bus gewährt wird. Der vierte Buszyklus (FIG 2d) korrespondiert hinsichtlich der aktuellen Zeile 4b mit dem zweiten Buszyklus (FIG 2b).

Die weitere Matrix 5a, 5b, 5c umfasst in der in FIG 2a bis 2b dargestellten Konstellation drei Zeilen 5a, 5b, 5c. Im ersten Buszyklus 2 (FIG 2a) ist die erste Zeile 5a die aktuelle Zeile. Im zweiten Buszyklus 2 (FIG 2b) ist die zweite Zeile 5b die aktuelle Zeile. Im dritten Buszyklus 2 (FIG 2c) ist die dritte Zeile 5c die aktuelle Zeile. Und im vierten Buszyklus 2 (FIG 2d) ist wieder die erste Zeile 5a die aktuelle Zeile. In jedem Buszyklus 2 wird den in der jeweils aktuellen Zeile 5a, 5b, 5c referenzierten Busteilnehmern Zugriff auf den Bus gewährt.

Für die oben exemplarisch genannten Inhalte der Matrizen 3, 4a, 4b ergibt sich damit für den in FIG 2a dargestellten Buszyklus 2 eine Buszuteilung für die Busteilnehmer mit den Referenznummern
[ 1, 5, 6, 17 ]; [ 3, 7 ], .... ,
für den in FIG 2b dargestellten Buszyklus 2 eine Buszuteilung für die Busteilnehmer
[ 1, 5, 6, 17 ] ; [ 4, 8 ], .... und
für den in FIG 2c dargestellten Buszyklus 2 eine Buszuteilung für die Busteilnehmer
[ 1, 5, 6, 17 ]; [ 3, 7 ], .....

Da damit z.B. den Busteilnehmern mit der Nummer "3" und "7" und den Busteilnehmern mit der Nummer "4" und "8" alternierend nur in jedem zweiten Buszyklus 2 ein Zugriff auf den Bus gewährt wird, ist der Buszyklus kürzer, als wenn diesen Busteilnehmern in jedem Buszyklus ein Zugriff auf den Bus gewährt würde.

Einem Busteilnehmer, der in genau einer Zeile einer *n*-zeiligen Busbelegungsmatrix referenziert ist, wird damit bei jedem *n*-ten Buszyklus ein Zugriff auf den Bus gewährt. Entsprechend korrespondiert jede Busbelegungsmatrix mit einer durch sie gebildeten "Geschwindigkeitsklasse". Ein Busteilnehmer, der in einer zweizeiligen Busbelegungsmatrix referenziert ist, erhält spätestens nach jedem zweiten Buszyklus einen Zugriff auf den Bus und gehört damit einer andern Geschwindigkeitsklasse an als ein Busteilnehmer, der in einer vierzeiligen Busbelegungsmatrix referenziert ist und entsprechend spätestens nach jedem vierten Buszyklus Zugriff auf den Bus erhält.

Zur Realisierung des Verfahrens wird jeder Busteilnehmer einer geeigneten oder je nach Anwendungsfall minimal erforderlichen Geschwindigkeitsklasse zugeordnet. Die Gesamtheit der Busteilnehmer in jeder Geschwindigkeitsklasse ergibt zunächst eine Liste. Für Busteilnehmer in der höchsten Geschwindigkeitsklasse entspricht diese Liste der einzigen Zeile 3 der entsprechenden Busbelegungsmatrix 3. Für Busteilnehmer der nächst niedrigeren, zweiten Geschwindigkeitsklasse werden die Elemente der Liste gleichmäßig auf die beiden Zeilen 4a, 4b der entsprechenden Busbelegungsmatrix 4a, 4b aufgeteilt. Für Busteilnehmer einer niedrigeren, dritten/vierten Geschwindigkeitsklasse werden die Elemente der jeweiligen Liste gleichmäßig auf die drei/vier Zeilen der entsprechenden Busbelegungsmatrix aufgeteilt, usw.

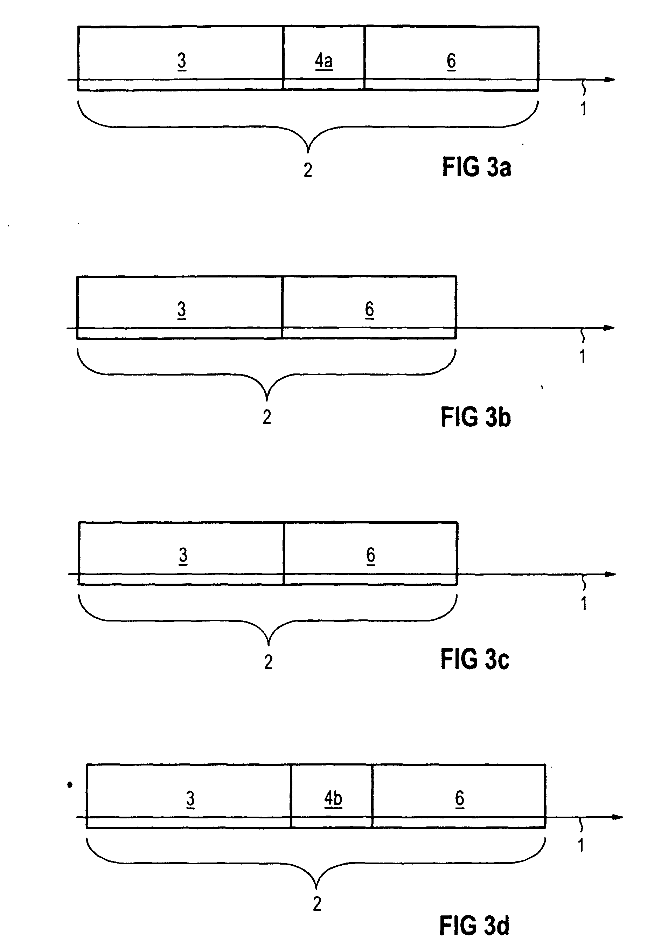

FIG 3a bis 3d zeigen eine Variante des erfindungsgemäße3n Verfahrens, bei der die Busbelegung gemäß der ersten Busbelegungsmatrix 3 und der letzten Busbelegungsmatrix 6 für azyklische Kommunikationsaufträge erfolgt. Nach jedem *n*-ten Buszyklus 2 wird ein überlanger Buszyklus 2 eingefügt (FIG 3a und FIG 3d) bei dem eine weitere Busbelegungsmatrix 4 für die Buszuteilung verwendet wird, deren *n* Zeilen 4a, 4b nach *n* überlangen Zyklen jeweils einmal als aktuelle Zeile 4a, 4b zur Anwendung kommen.

Damit lässt sich die Erfindung kurz wie folgt darstellen:

Jeder Busteilnehmer wird einer Geschwindigkeitsklasse zugeordnet und zu jeder Geschwindigkeitsklasse wird vorgegeben, wie häufig - alle wie viel Buszyklen 2 - sie bearbeitet werden soll, so dass einer Geschwindigkeitsklasse, die alle *n* Buszyklen 2 bearbeitet werden soll, eine Busbelegungsmatrix 5a ... 5n mit *n* Zeilen 5a ... 5n zugeordnet werden kann, wobei die Busteilnehmer der entsprechenden Geschwindigkeitsklasse gleichmäßig auf die *n* Zeilen verteilt sind und in jedem Buszyklus genau eine der *n* Zeilen 5a ... 5n sukzessive nacheinander eine aktuelle Zeile ist, bei der die darin referenzierten Busteilnehmer Zugriff auf den Bus erhalten.

## Patentansprüche

1. Verfahren zum Transfer von Daten über einen Bus, insbesondere einen Feldbus, zwischen einer Mehrzahl von Kommunikationsteilnehmern, wobei der Datentransfer zyklisch gemäß einer Buszykluszeit (2) erfolgt
**dadurch gekennzeichnet,**
**dass** ein erster Abschnitt der Buszykluszeit (2) zur Bearbeitung von Kommunikationsaufträgen von Busteilnehmern, die in einer ersten Busbelegungsmatrix (3) aufgeführt sind, und ein zweiter Abschnitt der Buszykluszeit zur Bearbeitung von Kommunikationsaufträgen von Busteilnehmern, die in einer zweiten Busbelegungsmatrix (4, 4b) aufgeführt sind, vorgesehen ist, wobei die erste Busbelegungsmatrix (3) mit einer ersten Geschwindigkeitsklasse und die zweite Busbelegungsmatrix (4a, 4b) mit einer zweiten Geschwindigkeitsklasse und jede weitere Busbelegungsmatrix (5a, ..., 5n, 6) mit einer jeweils weiteren Geschwindigkeitsklasse korrespondiert und für jede Busbelegungsmatrix (3, 4a, 4b, 5a, ..., 5n, 6) bzw. die korrespondierende Geschwindigkeitsklasse festgelegt ist, bei jedem wievielten Buszyklus (2) eine Bearbeitung von Kommunikationsaufträgen der einzelnen Kommunikationsteilnehmer der jeweiligen Busbelegungsmatrix (3, 4a, 4b, 5a, ..., 5n, 6) vorgesehen ist.

2. Verfahren nach Anspruch 1, wobei bei einer Busbelegungsmatrix (3, 4a, 4b, 5a, ..., 5n, 6) mit n Zeilen (4a, 4b, 5a, ..., 5n) während n Buszyklen (2) jede Zeile (4a, 4b, 5a, ..., 5n) sukzessive nacheinander genau einmal zur aktuellen Zeile wird, gemäß der die Buszuteilung erfolgt.

3. Verfahren nach Anspruch 2, wobei alle Busteilnehmer jeweils einer Geschwindigkeitsklasse zugeordnet sind und sämtliche Busteilnehmer einer Geschwindigkeitsklasse gleichmäßig auf die Zeilen der entsprechenden Busbelegungsmatrix aufgeteilt werden.

## Claims

1. Method for transferring data via a bus, in particular a field bus, between a plurality of communication subscribers, the data transfer being executed cyclically according to a bus cycle time (2),
**characterised in that**
a first segment of the bus cycle time (2) is provided for processing communication tasks of bus subscribers which are listed in a first bus allocation matrix (3) and a second segment of the bus cycle time is provided for processing communication tasks of bus subscribers which are listed in a second bus allocation matrix (4a, 4b), the first bus allocation matrix (3) corresponding to a first rate class and the second bus allocation matrix (4a, 4b) corresponding to a second rate class and each further bus allocation matrix (5a, ..., 5n, 6) corresponding to a respective further rate class, and it being determined for each bus allocation matrix (3, 4a, 4b, 5a, ..., 5n, 6), or for the corresponding rate class, after every how many bus cycles (2) processing of communication tasks of the individual communication subscribers of the respective bus allocation matrix (3, 4a, 4b, 5a, ..., 5n, 6) is provided.

2. Method according to claim 1, wherein, for a bus allocation matrix (3, 4a, 4b, 5a, ..., 5n, 6) having n rows (4a, 4b, 5a, ..., 5n), each row (4a, 4b, 5a, ..., 5n) becomes successively the actual row, according to which the bus allocation takes place, exactly once during n bus cycles (2).

3. Method according to claim 2, wherein all bus subscribers are assigned to one rate class in each case and all bus subscribers of a rate class are distributed uniformly to the rows of the corresponding bus allocation matrix.

## Revendications

1. Procédé pour le transfert de données par l'intermédiaire d'un bus, notamment un bus de terrain, entre plusieurs utilisateurs de communication, le transfert de données s'effectuant de façon cyclique selon un temps de cycle de bus (2),
**caractérisé par le fait qu'**une première section du temps de cycle de bus (2) est prévue pour le traitement de tâches de communication d'utilisateurs de bus qui sont référencés dans une première matrice d'occupation de bus (3) et qu'une deuxième section du temps de cycle de bus est prévue pour le traitement de tâches de communication d'utilisateurs de bus qui sont référencés dans une deuxième matrice d'occupation de bus (4a, 4b), la première matrice d'occupation de bus (3) correspondant à une première classe de vitesse, la deuxième matrice d'occupation de bus (4a, 4b) correspondant à une deuxième classe de vitesse, chaque autre matrice d'occupation de bus (5a à 5n, 6) correspondant à chaque fois à une autre classe de vitesse et, pour chaque matrice d'occupation de bus (3, 4a, 4b, 5a à 5n, 6), étant spécifié au combientième cycle de bus (2) est prévu un traitement de tâches de communication des utilisateurs individuels de la matrice d'occupation de bus respective (3, 4a, 4b, 5a à 5n, 6).

2. Procédé selon la revendication 1, dans lequel, pour une matrice d'occupation de bus (3, 4a, 4b, 5a à 5n, 6) avec *n* lignes (4a, 4b, 5a à 5n), pendant *n* cycles de bus (2), chaque ligne (4a, 4b, 5a à 5n) devient successivement exactement une fois la ligne actuelle selon laquelle l'attribution de bus s'effectue.

3. Procédé selon la revendication 2, dans lequel tous les utilisateurs de bus sont associés chacun à une classe de vitesse et tous les utilisateurs de bus d'une classe de vitesse sont répartis uniformément sur les lignes de la matrice d'occupation de bus correspondante.
